# EUROPEAN PATENT APPLICATION

(11) **EP 2 942 733 A1**
(43) Date of publication of application: **11.11.2015**
(21) Application number: 14176506.5
(22) Date of filing: 10.07.2014
(51) Int. Cl.: G06F 21/85, G06F 21/83, G06F 21/74

(54) **Architecture for platform security using a dedicated security device for user interaction**

(30) Priority: 09.05.2014 EP 14167792
(71) Applicant: NXP B.V., 5656 AG Eindhoven (NL)
(72) Inventor: Rombouts, Peter, Redhill Surrey RH1 1SH (GB); Nikov, Ventzislav, Redhill Surrey RH1 1SH (GB); Ricquier, Nico, Redhill Surrey RH1 1SH (GB); Van Ginderdeuren, Johan, Redhill Surrey RH1 1SH (GB)
(74) Representative: Hardingham, Christopher Mark

(57) **Abstract**

There is provided an architecture for a data processing platform using a dedicated security device for user interaction, the data processing platform (100, 200) comprising: a processing device (108); a security device (102) communicatively coupled (114) with the processing device (108), the security device (102) being adapted for receiving input data (116) and providing the input data (116) to the processing device (108) only if the input data (116) are associated with a predetermined security level range, e.g. if the processing device (108) is in a secure operating mode or if input data (116) are considered by the security device (102) to have a security level in the predetermined security level range.

## Description

### FIELD OF THE INVENTION

The present invention relates to the field of data processing platforms, in particular data processing platforms which are capable of performing security critical tasks.

### BACKGROUND

Applications are known in which a user has to interact with a device as a part of one authentication procedure. Examples are e.g. login procedures, banking software, payment procedures etc. Sometimes the user cannot be certain that that the platform/device is not compromised and for example eavesdrops on the communication, captures PIN codes or makes unauthorized use of security tokens.

### SUMMARY

In view of the above-described situation, there exists a need for an improved technique that enables to provide a data processing platform, while substantially avoiding or at least reducing one or more of the above-identified problems.

This need may be met by the subject matter according to the independent claims. Advantageous embodiments of the herein disclosed subject matter are described by the dependent claims.

According to an embodiment of a first aspect of the herein disclosed subject matter there is provided a data processing platform comprising: a processing device; a security device communicatively coupled with the processing device, the security device being adapted for (i) receiving input data; and (ii) providing the input data to the processing device only if the input data are associated with a predetermined security level range (e.g. if the input data are considered by the security device to have a security level in the predetermined security level range).

According to embodiments of the first aspect, the security device is adapted for providing the functionality of one or more of the herein disclosed embodiments and/or for providing the functionality as required by one or more of the herein disclosed embodiments, in particular of the embodiments of the first to the sixth aspect.

According to an embodiment of a second aspect of the herein disclosed subject matter, a security device is provided, the security device being adapted for communicative coupling with a processing device, the security device being further adapted for: receiving input data; and providing the input data to the processing device only if the input data are associated with a predetermined security level range.

According to embodiments of the second aspect, the security device is adapted for providing the functionality of one or more of the herein disclosed embodiments and/or for providing the functionality as required by one or more of the herein disclosed embodiments, in particular of the embodiments of the first to the sixth aspect.

According to an embodiment of a third aspect of the herein disclosed subject matter, a processing device adapted for communicative coupling with a security device is provided, the processing device being further adapted for: providing to the security device (102) at least one of the following: (i) a trigger signal (130) for triggering execution of a secure process on the security device; and (ii) output data including an information element indicating to the security device that the output data include an input request.

According to embodiments of the third aspect, the processing device is adapted for providing the functionality of one or more of the herein disclosed embodiments and/or for providing the functionality as required by one or more of the herein disclosed embodiments, in particular of the embodiments of the first to the sixth aspect.

According to an embodiment of a fourth aspect of the herein disclosed subject matter, a method of operating a security device in a data processing platform is provided, the data processing platform comprising the security device and a processing device, the method comprising: receiving input data (e.g. by the security device); and providing the input data to the processing device only if the input data are associated with a predetermined security level range.

According to embodiments of the fourth aspect, the method is adapted for providing the functionality of one or more of the herein disclosed embodiments and/or for providing the functionality as required by one or more of the herein disclosed embodiments, in particular of the embodiments of the first to the sixth aspect.

According to an embodiment of a fifth aspect of the herein disclosed subject matter, a method of operating a processing device in a data processing platform is provided, the data processing platform comprising the processing device and a security device, the method comprising providing to the security device (102) at least one of the following: (i) a trigger signal (130) for triggering execution of a secure process on the security device; and (ii) output data including an information element indicating to the security device that the output data include an input request.

According to embodiments of the fifth aspect, the method is adapted for providing the functionality of one or more of the herein disclosed embodiments and/or for providing the functionality as required by one or more of the herein disclosed embodiments, in particular of the embodiments of the first to the sixth aspect.

According to an embodiment of a sixth aspect of the herein disclosed subject matter, a computer program product in the form of a program element or a computer readable medium comprising the program element is provided, the program element being adapted for carrying out the method according to the fourth aspect (or one or more embodiments thereof) when executed on a processor assembly.

According to embodiments of the sixth aspect, the computer program product is adapted for providing the functionality of one or more of the herein disclosed embodiments and/or for providing the functionality as required by one or more of the herein disclosed embodiments, in particular of the embodiments of the first to the sixth aspect.

According to an embodiment of a seventh aspect of the herein disclosed subject matter, a computer program product in the form of a program element or a computer readable medium comprising the program element is provided, the program element being adapted for carrying out the method according to the fifth aspect (or one or more embodiments thereof) when executed on a processor assembly.

According to embodiments of the seventh aspect, the computer program product is adapted for providing the functionality of one or more of the herein disclosed embodiments and/or for providing the functionality as required by one or more of the herein disclosed embodiments, in particular of the embodiments of the first to the sixth aspect.

These aspects of the herein disclosed subject matter are based on the idea that the security of a processing platform can be enhanced by providing a dedicated security device (e.g. a security hub) for processing of input data and wherein the security device provides the input data to the processing device only if the input data correspond to a predetermined security level, e.g. if the input data are low security data.

In the following, exemplary embodiments of the herein disclosed subject matter are described, any number and any combination of which may be realized in an implementation of the herein disclosed subject matter.

Generally herein, if reference is made to the "processing device" it should be understood that there may be one or more further processing devices. Processing devices in the sense of the herein disclosed subject matter (e.g. the processing device or the at least one further processing device) may be e.g. a main processor, a secure element, a subscriber identity module (SIM), a baseband processor, etc, or in a more general wording, an internal processing device (i.e. a device included in the data processing platform). According to an embodiment, a processing device in the sense of the herein disclosed subject matter (e.g. at least one of the further processing devices) may be an external processing device (i.e. a device not included in the data processing platform), e.g. an external sever, external storage device, etc. Hence, in accordance with an embodiment, the processing device is an internal processing device and the further processing device may be an internal processing device or an external processing device.

According to an embodiment, the security device is adapted to provide a higher security level than the processing devices communicatively coupled thereto. In this regard, a higher security level may correspond to higher restrictions for installing computer program elements. For example, computer program elements may be stored on a read-only storage device.

Determining the security level of the input data may be performed in various ways, some of which are exemplarily described herein.

According to an embodiment, the security device is further adapted for controlling outputting of an input request, the input request defining an input security level of the input data; and the security device is further adapted to not provide the input data to the processing device depending on the input security level. For example, the input request may be a request for inputting credentials such as user login name and password or a pin code. Further, according to an embodiment, the input data are data which are provided by a user in response to the input request. According to an embodiment, the security device is adapted to derive the input security level of the input data from the input request. As mentioned above, the input data are considered to be associated with the predetermined security level range if the security level of the input data is within the predetermined security level range. In other words according to an embodiment the security device is further adapted for providing the input data to the processing device only if the input security level is within the predetermined security level range. According to a further embodiment, the security device is further adapted for not providing the input data to the processing device if the input security level is outside the predetermined security level range.

According to a further embodiment, the data processing platform comprises an output device, the output device being communicatively coupled to the security device. According to an embodiment, the output device is a display device (e.g. a screen, one or more light sources such as emitting diodes (LEDs)), an acoustic device (e.g. a loudspeaker), a haptic device (e.g. a vibration device), etc. According to a further embodiment, the output device is itself a processing device, e.g. the processing device or a further processing device as disclosed herein. According to an embodiment, the security device is adapted for providing output data to the output device. According to a further embodiment, the security device is further adapted for monitoring the output data provided to the output device, e.g. output data provided to the output device under the control of the processing device. According to an embodiment, the output data provided to the output device (e.g. output data provided to all output devices or output data provided to selected ones of the output device) are routed through the security device. For example, according to an embodiment the security device is adapted for receiving the output data (which may be authenticated output data) and forwarding the output data to the output device. It should be understood that accordingly in an embodiment the processing device (e.g. all processing devices of the data processing platform) is adapted for routing the output data through the security device, e.g. by providing the output data exclusively to the security device. The output data can be authenticated with any known method such as Message Authentication Code (MAC) or Cryptographic Signature.

According to an embodiment, the (authenticated) output data may be received through the processing device (e.g. a main processor or a baseband processor) from an external server or storage device.

According to a further embodiment the processing device is a first processing device and the security device is further adapted for providing the input data to a second processing device if the input security level is outside the predetermined security level range. The second processing device to which the input data are provided in this case may be identified by the input request. For example, the input request may have associated therewith the identity of the second processing device. According to a further embodiment, the security device is adapted for processing the input data itself.

According to a further embodiment, the processing device is further adapted for providing the output data to the security device. According to a further embodiment, the security device is further adapted for forwarding the output data to the output device. According to an embodiment, the output data is display data rendered under control of the processing device. For example, the output data may be display data rendered by the processing device. In this way, the processing load imposed on the security device may be kept low since the display data are rendered by the processing device and the security device only has to forward the display data.

According to an embodiment, the output data may include an information element indicating to the security device that the output data include an input request. According to a further embodiment, the information element defines the input security level.

According to an embodiment, the security device further comprises a storage having stored therein the output data (e.g. in the form of the predetermined output data). In particular in such a case, the security device may be further adapted for forwarding the predetermined output data to the output device, e.g. upon a trigger signal from the processing device. For example, according to an embodiment of the processing device may provide to the security device a trigger signal indicating "authenticate user" and the security device may select from the storage the predetermined output data associated with the trigger signal. This may be performed by any suitable means, e.g. a lookup table. Further, the security device may provide the predetermined output data to the output device, which for example may ask the user for inputting her or his credentials. According to an embodiment (e.g. instead of the output data including an information element defining the input security level) the trigger signal may define the input security level. According to an embodiment, the output data as disclosed herein are the trigger signal.

According to an embodiment, the data processing platform further comprises a signaling device, the signaling device being communicatively coupled to the security device and the security device being adapted for controlling the signaling device so as to indicate the input security level to the user. For example, in an embodiment the signaling device may be adapted to provide a signal (e.g. optical signal or acoustical signal) if the input security level is defined (e.g. by the input request, by the output data, by the information element, etc.) as being outside the predetermined security level range. In this way, the signaling device may indicate to a user that the input data provided by the user while the signal is on is securely handled by the security device (e.g. is not forwarded to the processing device).

According to an embodiment, the security device is further adapted for receiving a trigger signal from the processing device, and in response to the trigger signal, executing a a secure process (e.g. a respective software component - however, the process may also be implemented in hardware) on the security device, the secure process processing the input data without providing the input data to the processing device. According to an embodiment, the secure process may be an encryption process, a payment process, the generation of a hash code, pin verification, etc. According to an embodiment, the security device provides, in the response to the trigger signal and after executing the secure process, a return signal, e.g. an output of the secure process (e.g. the hash code, encrypted credentials, unlocking of a device (e.g. unlocking of the data processing platform), etc.).

According to a further embodiment, the security device comprises a storage for storing the software component, the storage being communicatively coupled exclusively to the security device (i.e. is not accessible by an external component located outside the security device).

According to an embodiment, the security device is adapted for selectively taking one of a secure operating mode and a non-secure operating mode; the security device being further adapted for providing the input data to the processing device depending on whether the input data are associated with the predetermined security level range if the security device is in the secure operating mode; and the security device being adapted for providing the input data to the processing device independent of the input data (and/or the output data) if the security device is in the non-secure operating mode (e.g. in the non-secure operating mode any input data is considered by the security device to have a security level inside the predetermined security level range). According to an embodiment, in the secure operating mode any input data is considered by the security device to have a security level outside the predetermined security level range. For example, according to an embodiment the security device is adapted to consider any input data to have a security level outside the predetermined security level range. According to an embodiment, the security device is configured for accepting only authenticated output data from the processing device if the security device is in the secure operating mode.

According to an exemplary embodiment, the security device is adapted for monitoring interaction (e.g. a user interaction) with the processing device and/or with at least one further processing device (e.g. a SIM and/or a secure element) and optionally the processing device and/or at least one of the further processing devices are adapted for providing to the security device a subsequent trigger signal to enable the secure operating mode.

According to a further embodiment, the security device is adapted to take (e.g. to switch to) the secure operating mode depending on the data monitored by the security device (e.g. monitored interaction with the processing device, monitored output data, etc).

According to an embodiment, a processing device as disclosed herein comprises a processor assembly having at least one main processor and at least one graphics processor. In such a case, the display data may be rendered by the at least one graphics processor under control of the at least one main processor. Other scenarios are also possible. According to a further embodiment, the security device is communicatively coupled to an input device, e.g. two or more input devices. According to an embodiment, an input device in the sense of the herein disclosed subject matter is a user interface (e.g. a human interface device) such as a touch screen, a keypad, a button, a microphone, a camera, an acceleration sensor, a temperature sensor, a global positioning system (GPS) sensor, a compass, a relative humidity sensor, a pressure sensor, an infrared sensor, a fingerprint scanner, an iris scanner, etc. According to a further embodiment, the input device is itself a processing device, e.g. the processing device or a further processing device as disclosed herein. According to a further embodiment, the input data are received from the input device. Further, the security device may be communicatively coupled to at least one further input device. Generally speaking, the security device may be communicatively coupled to one or more input devices, e.g. to all input devices or selective ones of the input devices of the data processing platform. According to an embodiment, the security device is a security hub.

According to an embodiment, the security device is adapted for considering all input data which are received from an input device as not being associated with the predetermined security level range. According to an embodiment security device is adapted for considering, status data, and in particular status data generated by the security device, as being associated with the predetermined security level range.

According to an embodiment, the security device is communicatively coupled to the output device as described herein. According to a further embodiment, the security device is communicatively coupled to at least one further output device. Generally speaking, the security device may be communicatively coupled to one or more output devices, e.g. to all output devices of the data processing platform. According to an embodiment, the security device is a dedicated device for handling all user interaction. According to an embodiment, the data processing platform is a data processing apparatus.

The computer program element as disclosed herein may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter or part thereof may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules. For example, the security device may be provided in software, in particular running in a virtual machine which itself is running on the processing device. According to another embodiment, the security device may be a hardware device, or a software component which is running on hardware dedicated to the security device.

In the above there have been described and in the following there will be described exemplary embodiments of the subject matter disclosed herein with reference to a data processing platform, a security device, a method of operating a security device, a method of operating a processing device, and respective computer program products. It has to be pointed out that of course any combination of features relating to different aspects of the herein disclosed subject matter is also possible. In particular, some features have been or will be described with reference to apparatus (e.g. platform, device) type embodiments whereas other features have been or will be described with reference to method type embodiments. However, a person skilled in the art will gather from the above and the following description that, unless other notified, in addition to any combination of features belonging to one aspect also any combination of features relating to different aspects or embodiments, for example even combinations of features of apparatus type embodiments and features of the method type embodiments are considered to be disclosed with this application.

The aspects and embodiments defined above and further aspects and embodiments of the herein disclosed subject matter are apparent from the examples to be described hereinafter and are explained with reference to the drawings, but to which the invention is not limited.

### BRIEF DESCRIPTION OF THE DRAWINGS

Figure 1 shows a data processing platform according to embodiments of the herein disclosed subject matter.
Fig. 2 shows a further data processing platform according to embodiments of the herein disclosed subject matter.
Fig. 3 illustrates the communication of entities of a data processing platform according to embodiments of the herein disclosed subject matter.
Fig. 4 illustrates the communication of entities of a data processing platform according to embodiments of the herein disclosed subject matter.
Fig. 5 shows a data processing platform according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless noted otherwise.

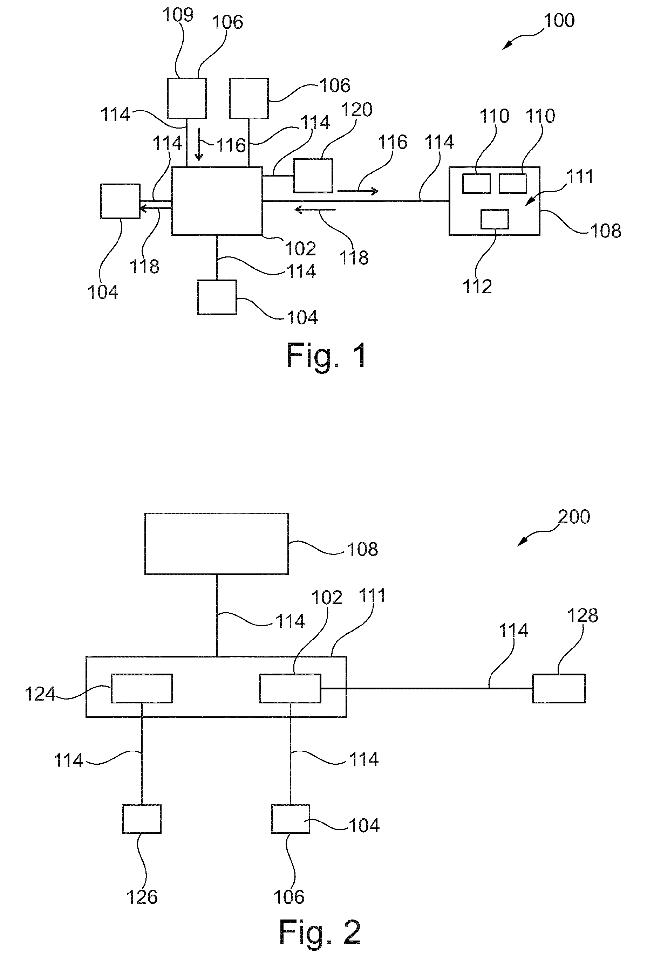

Figure 1 shows a data processing platform according to embodiments of the herein disclosed subject matter.

In accordance with an embodiment, the data processing platform 100 comprises a security device 102. Further, in accordance with an embodiment the platform 100 comprises one or more input devices 104, e.g. two input devices 104 as shown in Fig. 1, which are communicatively coupled to the security device 102. The input devices 104 may include for example one or more of a touchscreen, a keyboard, a switch, a keypad, a activation button, a microphone, a camera, an acceleration sensor, a temperature sensor, an global positioning system (GPS) sensor, a compass, a relative humidity sensor, a pressure sensor, an infrared sensor, a fingerprint scanner, an iris scanner, microphone, accelerometer, camera, etc.

In accordance with an embodiment, the data processing platform 100 further comprises one or more output devices 106 e.g. two output devices 106 as shown in Fig. 1. The output devices 106 may include for example one or more of a touchscreen, an electrooptic transducer such as a light emitting diode (LED), an electroacoustic transducer such as a loudspeaker, etc. According to an embodiment, the data processing platform 100 may comprise a combined input output device, such as the touchscreen mentioned above, which is capable of providing the functionality of an input device 104 and the functionality of the output device 106.

According to an embodiment one or more of the output devices 106 may act as the signaling device according to embodiments of the herein disclosed subject matter, wherein the security device 102 is adapted for controlling the signaling device so as to indicate the input security level, i.e. the security level defined for the input data, to the user. According to another embodiment, a dedicated signaling device is provided, the sole purpose of which is to indicate the input security level to the user.

In accordance with an embodiment, the security device 102 is communicatively coupled to one or more processing devices 108, e.g. to a single processing device 108, as shown in Fig. 1. The processing device 108 may include a processor assembly 111 having one or more main processors 110, e.g. two main processors 110 as shown in Fig. 1. Further, the processor assembly 111 may include one or more graphics processors 112, e.g. one graphics processor 112. Further, the processor assembly may include one or more baseband processors (which processes e.g. GSM, 2G, 3G, 4G (as defined in the third generation partnership project (3GPP), GPS, or other (wireless or wired) communication interfaces. Communicative coupling is indicated at 114 in Fig. 1.

In accordance with an embodiment, the security device 102 itself includes a processor assembly having, for example, one or more main processors and optionally one or more graphics processors. However, from an energy consumption perspective it may be advantageous to omit graphics processors in the security device 102. Nevertheless, in accordance with an embodiment, the functionality of the security device 102 as described herein is provided by one or more program elements which provide the described functionality when executed on a processor assembly.

According to an embodiment, the security device 102, at least in normal operation (non-secure operating mode), forwards data received from the input devices 104 (input data, exemplarily indicated at 116) to the processing device 108. In accordance with a further embodiment, at least in normal operation (non-secure operating mode), the security device for words data are received from the processing device 108 (e.g. output data, exemplarily indicated at 118) to the output devices 106. Routing of data to the respective devices is performed according to known methods.

In accordance with an embodiment, the input data are provided to the processing device 108 only if the input data are associated with a predetermined security level range, e.g. if the security device is in a non-secure operating mode. According to an embodiment, the security device 102 may be adapted for automatically switching between the non-secure operating mode and a secure operating mode depending on operating conditions. Such operating conditions may include for example outputting often input request, the input request requesting the input in of confidential data by a user. According to another embodiment, there may be provided a switch 120 allowing the user to manually switch between the secure operating mode and the non-secure operating mode. The switch 120 may be provided as a software switch or as a hardware switch. Preferably the switch 120 is exclusively coupled with or controlled by the security device 102.

According to an embodiment, a first entity of the data processing platform (e.g. the processing device or a further processing device) is adapted for initiating the secure operating mode. According to a further embodiment, a second entity of the data processing platform (e.g. the processing device or a further processing device) is adapted for initiating the non-secure operating mode. Generally the first entity and the second entity may be a hardware element or a software element. According to an embodiment, the second entity is the first entity, i.e. the functionality of the first entity and the second entity is implemented by the same, single element. According to a further embodiment, the first entity and the second entity are different elements.

A practical application (example) of embodiments of the herein disclosed subject matter is a financial transaction handled by a Secure Element (SE): A main processor may be adapted for initiating a transaction with the SE through the security device in the form of a security HUB. This may trigger the secure operating mode or, in another embodiment, the SE may be adapted for subsequently triggering the secure operating mode. In accordance with an embodiment, the security HUB cuts of the main processor from all input data, and the pin entry data is sent to the SE. In accordance with a further embodiment, after completion of the transaction the SE signals the security HUB it can leave the secure state. In this example the main processor (first entity) enables the secure mode but the SE (second entity) disables it.

As generally herein, the communicative coupling (indicated at 114 in Fig. 1) of the respective entities is preferably performed by known means, e.g. a touchscreen may be connected to the security device 102 by electrical conductors and by using common protocols for the communication. However, it should be understood that communicative coupling may be of any suitable type and any such type can be employed with embodiments of the herein disclosed subject matter as long as the communicative coupling provides the necessary functionality to implement embodiments of the herein disclosed subject matter.

Fig. 2 shows a further data processing platform 200 according to embodiments of the herein disclosed subject matter.

The data processing platform 200 comprises a security device 102, a processing device 108 and a combined input output device 104, 106 in the form of touchscreen. Communicative coupling is again indicated at 114.

The security device 102 is implemented on a processor assembly 111 on which there is implemented also a sensor hub 124. The sensor hub 124 is communicatively coupled with the one or more sensors indicated at 126 in Fig. 2. Using the processor assembly 111 on which there is implemented the sensor hub 124 has the advantage that the functionality of the security device 102 can easily be implemented on an existing platform which already comprises a sensor hub 124. In an embodiment, the security device is implemented as running in a virtual machine which itself is running on the processor assembly 111.

In accordance with an embodiment, the data processing platform 200 comprises a secure element 128 which is communicatively coupled or communicatively coupleable with the security device 102. According to an embodiment, the secure element 128 include security relevant data such as the cryptographic key and/or may provide a security relevant service. According to an embodiment, the security device 102 is adapted for communicating with the secure element 128 if this is necessary for the security device 102 to have the secure element perform one or more embodiments of the herein disclosed subject matter, e.g. an encryption of credentials of a user.

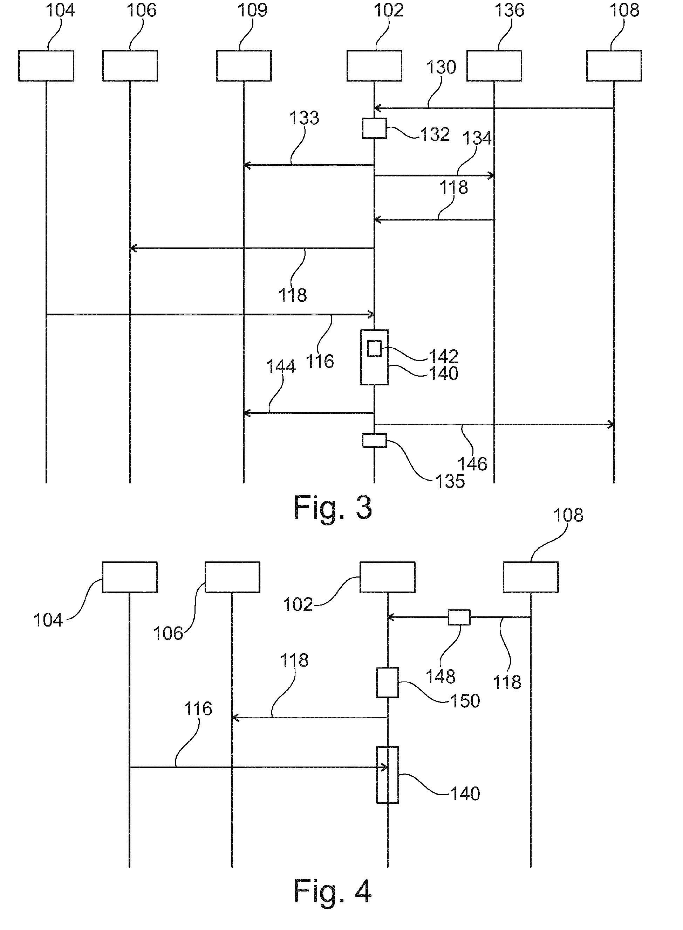

Fig. 3 illustrates the communication of entities of a data processing platform according to embodiments of the herein disclosed subject matter.

According to an embodiment, the processing device 108 (or an application running thereon) provides a trigger signal 130, e.g. in the form of a security request, to the security device 102. In response to the security request 130, the security device switches to a secure operating mode, indicated at 132. In accordance with an embodiment, in response to switching to the secure operating mode, the security device 102 provides a control signal 133 to the signaling device 109 in order to signal to the user that the security device is in the secure operating mode.

According to an embodiment, the security device 102 provides a retrieve request 134 to a storage device 136, the retrieve request 134 requesting the storage device 136 to provide output data 118 to the security device 102. In accordance with an embodiment, the security device 102 forwards the output data 118 to the output device 106, the output data being done input request requesting a user to input the input data 116 (e.g. credentials) into the input device 104. In accordance with an embodiment, the input data 116 are forwarded to the security device 102.

Depending on the trigger signal 130, according to an embodiment the security device 102 performs actions (not shown in Fig. 3) associated with the trigger signal 130. The process 140 associated with the trigger signal 130 and defining these actions may be predefined and stored in a storage of the security device, e.g. in the storage 136. Respective communications between the security device 102 and the storage 136 are not shown in Fig. 3.

In an embodiment, the process 140 is a payment process. According to an embodiment, the process 140 defined by the trigger signal 130 is free of any communication with the processing device 108, thereby ensuring that the input data 116 (e.g. received by the security device 102 from the input device 104) is not provided to the processing device 108. According to another embodiment not shown in the Fig. 3, the process 140 is performed at least partially in a secure element (as described herein) communicatively coupled to the security device 102.

In accordance with another embodiment, in order to ensure that the input data 116 is not provided to the processing device, the security device 102 checks (indicated at 142) as to whether the input data 116 are associated with the predetermined security level range, e.g. as to whether the security device is in the non-secure operating mode. Since in the described example the security device is in the secure operating mode (see 132), in accordance with an embodiment in the described situation the security device 102 will not provide the input data 116 to the processing device 108. The security check 142 may occur at any suitable time which of course it may depend on the process 140 to be performed by the security device 102 in response to the trigger signal 130.

In accordance with an embodiment, after finishing the process 140 the security device 102 provides a control signal 144 to the signaling device 109 to thereby operate the signaling device so as to indicate to the user that the security device 102 does no longer control the inputs to the input device 104.

Further in accordance with an embodiment, the security device 102 may provide to the processing device 108 a feedback signal 146 indicating as to whether that the process 140 requested by the trigger signal 130 has been performed successfully by the security device 102. Optionally, the security device may switch into an non-secure mode (as described herein), indicated at 135 in Fig. 3.

It should be understood that the above described communication between entities of the data processing platform only illustrates by way of example a possible communication sequence in accordance with embodiments of the herein disclosed subject matter. However, numerous variations are possible, an example of which is illustrated with regard to Fig. 4.

Fig. 4 illustrates the communication of entities of a data processing platform according to embodiments of the herein disclosed subject matter.

In accordance with an embodiment, the security device 102 is adapted for monitoring (indicated at 150 in Fig. 4) the output data 118 provided to the output device 106, which according to an embodiment are rendered by the processing device 108 and provided to the security device 102. Such monitoring 150 may allow the security device 102 to decide as to whether the security device 102 has to adopt the secure operating mode or not. For example, in an embodiment the processing device 108 is adapted for including in the output data 118 an information element 148 indicating the security level of the output data 118. According to an embodiment, the security level of the output data 118 defines the security level of input data 116 which are received by the security device 102 (e.g. from the input device 104) in response to providing the output data 118 to an output device 106 (thus effecting a respective output by the output device 106). For example, the security level of the input data 116 may be defined as to be the same as the security level of the output data 118. According to an embodiment, the security device 102 is adapted to switch into the secure operating mode depending on the security level of the input data 116. According to another embodiment, the security device 102 is adapted for checking as to whether the security level of the input data 116 is within the predetermined security level range and forwarding the input data 116 to the processing device 108 only if the security level of the input data 116 is within the predetermined security level range.

According to an embodiment, the information element 148 may also identify a process 140 the security device has to perform with in response to outputting the output data 118. The process 140 may include receiving the input data 116, as is shown in Fig. 4. The further actions and communications performed by security device 102 in response to receiving the input data 116 may be the same as described with regard to Fig. 3.

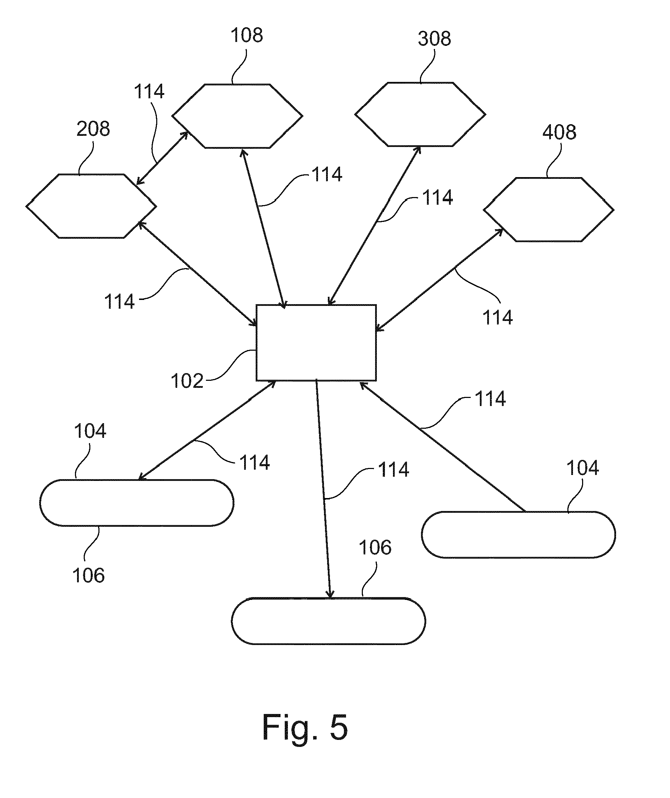

Fig. 5 shows a data processing platform 300 according to embodiments of the herein disclosed subject matter.

In accordance with an embodiment, the data processing platform 300 is a user device, such as a mobile phone. The data processing platform 300 comprises a plurality of processing devices 108, 208, 308, 408, e.g. a main processor 108, a baseband processor 208, a secure element 308, and a subscriber identity module (SIM) 408. The processing devices 108, 208, 308 and 408 are communicatively coupled (indicated at 114) with a security device 102 in the form of a security hub. Two or more processing device may be communicatively coupled to each other (e.g. the main processor 108 and the baseband processor 208). Further communicatively coupled to the security device 102 are one or more input devices in the form of human interface input devices, one of which is shown at 104 in fig. 5. Further communicatively coupled to the security device 102 are a one or more output devices in the form of human interface output devices, one of which is shown at 106 in fig. 5. In accordance with an embodiment, further communicatively coupled with the security device 102 is human interface input-output device.

In the following, an exemplary implementation of embodiments of the herein disclosed subject matter is provided, illustrating possible use cases.

If the user device 300 is locked (e.g. by user interaction or after expiration of a predetermined time interval), in accordance with an embodiment the main processor is adapted for triggering a monitoring of selected input channels of the user device 300 wherein each input channel may be established on communicative coupling 114 of a respective one of the human interface input device(s) 104 with the security device 102. According to an embodiment, the main processor is putting itself in a sleep state after triggering the monitoring of the selected input channels. In accordance with an embodiment, triggering monitoring of the selected input channels also triggers switching of the security device 102 into a secure operating mode.

According to an embodiment, the selected input channels (or the corresponding human interface input devices 104) will be monitored by the security device 102. A human interface input device 104 may be e.g. a touch screen, a keypad, a button, a microphone, a camera, an acceleration sensor, a temperature sensor, a global positioning system (GPS) sensor, a compass, a relative humidity sensor, a pressure sensor, an infrared sensor, a fingerprint scanner, an iris scanner, etc. For example, in an embodiment, a microphone, buttons and a touch screen of the user device 300 are monitored. Monitoring the microphone may allow for providing input data which are based on a speech input. In accordance with an embodiment, the security device 102 is adapted for requesting a PIN upon detection of a valid signal (valid input data) on at least one of the selected input channels (or the corresponding human interface input devices 104). In accordance with an embodiment, requesting a PIN corresponds to outputting a respective input request by the security device 102, e.g. by outputting the input request to an appropriate one of the human interface output devices 106. A human interface output device 106 may be e.g. a display device (e.g. a screen, one or more light sources such as emitting diodes (LEDs)), an acoustic device (e.g. a loudspeaker), a haptic device (e.g. a vibration device), etc. E.g. the touch screen is a human interface I/O device providing the functionality of a human interface input device 104 and a human interface output device 106 in a single device. In accordance with an embodiment, since the security device 102 is in the secure operating mode, the security device 102 is adapted to not provide to the main processing device 108 any input data (i.e. the PIN) which the security device 102 receives in response to the input request from one of the human interface input devices 104.

In accordance with an embodiment, the security device 102 is adapted for verifying the input data (i.e. the PIN) for correctness. In accordance with a further embodiment, the security device 102 is adapted for waking up the main processor 108 and optionally for providing to the main processor a status message that the input data have been correctly entered, if the security device 102 determines that the input data is correct. In accordance with an embodiment, the security device 102 is adapted for switching into non-secure operating mode after waking up the main processor 108 (and, optionally, providing the status message).

In accordance with a further embodiment, the security device 102 is adapted for unlocking a SIM card communicatively coupled with the SIM 408. In accordance with an embodiment, the security device 102 is adapted for requesting (spontaneously or when triggered by the main processor 108) inputting of a SIM PIN code, i.e. for outputting of an input request requesting the SIM PIN code. Further, the security device 102 is further adapted for sending the SIM PIN code directly to the SIM 408 without providing the SIM PIN code to the main processor 108. Hence, in this use case by way of implementing the operation of the security device (not providing the SIM PIN code, which is received in response to its input request, to the main processor 108) the input request defines the SIM PIN code not being associated with the predetermined secure security level range as described herein. Further, in this use case the main processor 108 forms "the processing device" in the sense of the herein disclosed subject matter, i.e. the processing device to which the input data (SIM PIN code) is provided only if the input data is associated with a predetermined security level range. The processing devices 208, 308, 408 may be considered as further processing devices in the sense of the herein disclosed subject matter, at least with regard to the use case related to inputting of the SIM PIN code.

The above use cases show that embodiments of the herein disclosed subject matter may be implemented in numerous functions in a single data processing platform (e.g. device) by making use of one or more (different) sets of entities of the data processing platform.

If some features are described with regard to method embodiments, e.g. that the security device forwards data to another entity, such as an input device, it should be understood that such method embodiments are considered to also disclose a respective apparatus embodiment, e.g., in the above example, that the security device is adapted for forwarding the data to the other entity.

Further, although some embodiments refer to a communication or a signal, etc., it should be understood that each of these references is considered to implicitly disclose a respective reference to the communicating entities being adapted for performing the communication.

It should further be noted that a device or an assembly as disclosed herein is not limited to dedicated entities as described in some embodiments. Rather, the herein disclosed subject matter may be implemented in various ways while still providing the specified functionality.

According to embodiments of the invention, any suitable entity (e.g. components, and devices) disclosed herein, e.g. the security device are at least in part provided in the form of respective computer programs which enable a processor assembly to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein. According to other embodiments, an entity (e.g. a software module, a hardware module or a hybrid module) is configured for providing two or more functions as disclosed herein. According to still other embodiments, two or more entities (e.g. components or device) are configured for providing together a function as disclosed herein.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

Further, it should be noted that while the exemplary data processing platform in the drawings include a particular combination of several embodiments of the herein disclosed subject matter, any other combination of embodiment is also possible and is considered to be disclosed with this application.

In order to recapitulate some of the above described embodiments of the present invention one can state:

There is provided an architecture for a data processing platform using a dedicated security device for user interaction, the data processing platform comprising: a processing device; a security device communicatively coupled with the processing device, the security device being adapted for receiving input data and providing the input data to the processing device only if the input data are associated with a predetermined security level range, e.g. if the processing device is in a secure operating mode or if input data are considered by the security device to have a security level in the predetermined security level range.

According to embodiments of the herein disclosed subject matter, the security level of the input data may be defined for example
- by an input request requesting the inputting of the input data
- from output data monitored by the security device, e.g. from an information element contained in the output data
- from the trigger signal (e.g. a type of the trigger signal) received by the security device from the processing device
- from an operating mode of the security device (which may be e.g. one of a secure operating mode and a non-secure operating mode)

## Claims

1. Data processing platform (100, 200) comprising:
a processing device (108);
a security device (102) communicatively coupled (114) with the processing device (108), the security device (102) being adapted for
receiving input data (116); and
providing the input data (116) to the processing device (108) only if the input data (116) are associated with a predetermined security level range.

2. Data processing platform (100, 200) according to claim 1,
the security device (102) being further adapted for controlling outputting of an input request, the input request defining an input security level of the input data (116); and
the security device (102) being adapted to not provide the input data (116) to the processing device (108) depending on the input security level.

3. Data processing platform (100, 200) according to claim 2,
the security device (102) being further adapted for providing the input data (116) to the processing device (108) if the input security level is within the predetermined security level range;
the security device (102) being further adapted for not providing the input data (116) to the processing device (108) if the input security level is outside the predetermined security level range.

4. Data processing platform (100, 200) according to any one of the preceding claims, further comprising
an output device (106), the output device (106) being communicatively coupled (114) to the security device (102);
the security device (102) being further adapted for monitoring output data (118) provided to the output device (106).

5. Data processing platform (100, 200) according to the preceding claim,
the processing device (108) being further adapted for providing the output data (118) to the security device (102); and
the security device (102) being further adapted for forwarding the output data (118) to the output device (106).

6. Data processing platform (100, 200) according claim 4 or 5, the output data (118) being display data rendered under control of (e.g. by) the processing device (108).

7. Data processing platform (100, 200) according to claim 4,
the security device (102) further comprising a storage (136) having stored therein the output data (118);
the security device (102) being further adapted for forwarding the output data (118) to the output device (106).

8. Data processing platform (100, 200) according to any one of claims 2 to 7, the data processing platform (100, 200) further comprising:
a signaling device (109);
the signaling device (109) being communicatively coupled (114) to the security device (102);
the security device (102) being adapted for controlling (133, 144) the signaling device (109) so as to indicate the input security level.

9. Data processing platform (100, 200) according to any one of the preceding claims, the security device (102) being further adapted for
receiving a trigger signal (130) from the processing device (108), and
in response to the trigger signal (130), executing a secure process (140) on the security device (102), the secure process (140) processing the input data (116) without providing the input data (116) to the processing device (108).

10. Data processing platform (100, 200) according to any one of the preceding claims,
the security device (102) being adapted for selectively taking one of a secure operating mode (132) and a non-secure operating mode (135);
the security device (102) being further adapted for providing the input data (116) to the processing device (108) only if the input data (116) are associated with the predetermined security level range if the security device (102) is in the secure operating mode; and
the security device (102) being adapted for providing the input data (116) to the processing device (108) independent of the input data (116) if the security device (102) is in the non-secure operating mode (135).

11. Security device (102) being adapted for communicative coupling with a processing device (108), the security device (102) being further adapted for:
receiving input data (116); and
providing the input data (116) to the processing device (108) only if the input data (116) are associated with a predetermined security level range.

12. Processing device (108) being adapted for communicative coupling with a security device (102), the processing device (108) being further adapted for:
providing to the security device (102) at least one of the following:
a trigger signal (130) for triggering execution of a secure process on the security device;
output data including an information element indicating to the security device that the output data include an input request.

13. Method of operating a security device (102) in a data processing platform (100, 200), the data processing platform (100, 200) comprising the security device (102) and a processing device (108), the method comprising:
receiving the input data (116); and
providing the input data (116) to the processing device (108) only if the input data (116) are associated with a predetermined security level range.

14. Method of operating a processing device (108) in a data processing platform (100, 200), the data processing platform (100, 200) comprising the processing device (108) and a security device (102), the method comprising:
providing to the security device (102) at least one of the following:
a trigger signal (130) for triggering execution of a secure process on the security device;
output data including an information element indicating to the security device that the output data include an input request.

15. Computer program product in the form of a program element or a computer readable medium comprising the program element, the program element being adapted for carrying out the method according to one of claims 13 or 14 when executed on a processor assembly (111).
